# EUROPÄISCHE PATENTSCHRIFT

(11) **EP 2 670 557 B1**
(45) Veröffentlichungstag und Bekanntmachung des Hinweises auf die Patenterteilung: **09.05.2018**
(21) Anmeldenummer: 12702964.3
(22) Anmeldetag: 30.01.2012
(51) Int. Cl.: B23K 26/38, B23K 26/04, B23K 26/08, B23K 26/03, B23K 101/18

(54) **VERFAHREN ZUM ABTRENNEN EINES RANDABSCHNITTS EINES WERKSTÜCKS MITTELS EINES LASERTRENNSCHNITTS SOWIE ZUGEHÖRIGE LASERSCHNEIDVORRICHTUNG**
METHOD FOR CUTTING OFF AN EDGE SEGMENT OF A WORKPIECE BY MEANS OF A LASER CUT AND ASSOCIATED LASER CUTTING DEVICE
PROCÉDÉ POUR SÉPARER UNE SECTION DE BORD D'UNE PIÈCE PAR UNE COUPE DE SÉPARATION AU LASER AINSI QUE DISPOSITIF DE COUPE AU LASER ASSOCIÉ

(30) Priorität: 31.01.2011 DE 102011003395
(43) Veröffentlichungstag der Anmeldung: 11.12.2013
(73) Patentinhaber: Trumpf Laser- und Systemtechnik GmbH, 71254 Ditzingen (DE)
(72) Erfinder: WADEHN, Wolf, 71735 Nussdorf (DE); DEMEL, Peter, 70597 Stuttgart (DE); GRILL, Markus, D-74354 Besigheim (DE); KOHLLÖFFEL, Ralf, D-74369 Löchgau (DE); HAGENLOCHER, Tobias, 71254 Ditzingen (DE); VON DRIESCH, Ralf, 71254 Ditzingen (DE)
(74) Vertreter: Kohler Schmid Möbus Patentanwälte
(86) Internationale Anmeldenummer: PCT/EP2012/000394
(87) Internationale Veröffentlichungsnummer: WO 2012/104053

(56) Entgegenhaltungen:
- DE-A1-102004 043 076
- JP-A- 9 136 174
- JP-A- 10 146 671
- US-A1- 2009 153 868
- US-A1- 2010 122 970
- DATABASE WPI Week 199711 Thomson Scientific, London, GB; AN 1997-113821 XP002675787, -& JP 9 001367 A (KAWASAKI STEEL CORP) 7. Januar 1997 (1997-01-07)

## Beschreibung

Die Erfindung betrifft ein Verfahren zum Abtrennen eines Randabschnitts eines Werkstücks mittels eines Lasertrennschnitts, wobei der Lasertrennschnitt durch mehrere aneinander gereihte Einzeltrennschnitte gebildet wird und wobei ein den Lasertrennschnitt ausführender Laserschneidkopf nach einem Einzeltrennschnitt jeweils entlang einer definierten Bewegungsbahn in eine Startposition des jeweils nächsten Einzeltrennschnitts bewegt wird.

Ein derartiges Verfahren ist beispielsweise durch die JP 9 001367 A bekannt geworden.

In der Praxis weisen Werkstücke, insbesondere solche, die durch Umformung aus einem Blech gewonnen werden, wie etwa Tiefziehteile, häufig unerwünschte Randabschnitte auf, die entfernt werden müssen. Diese Randabschnitte werden dabei üblicherweise mittels eines von einem Laserschneidkopf ausgeführten Lasertrennschnitts als sogenannte Restgitter von dem Werkstück abgetrennt und nach unten von dem Werkstück abgeführt. Größere zusammenhängende Randabschnitte können dabei oftmals nur schwerlich von dem Werkstück entfernt werden bzw. können aufgrund ihres Gewichts Schäden an der Laserschneidvorrichtung verursachen. Auch bereitet deren Handhabung bei der weiteren Entsorgung bzw. deren Rückführung in den Wertstoffkreislauf Schwierigkeiten.

Aus Fig. 1 der JP 9 001367 A ist ein Verfahren zum Abschneiden eines Randabschnitts des Werkstücks mittels eines Lasertrennschnitts bekannt, der durch mehrere aneinander gereihte Einzeltrennschnitte gebildet wird. Ein den Lasertrennschnitt ausführender Laserschneidkopf wird nach einem Einzeltrennschnitt jeweils entlang einer definierten Bewegungsbahn in eine Startposition des jeweils nächsten Einzeltrennschnitts bewegt. Um die Prozesssicherheit zu erhöhen, ist es aus Fig. 3 der JP 9 001367 A bekannt, den Einzeltrennschnitt soweit bis zu einem Punkt zu verlängern, dass der Laserschneidkopf, wenn er für den nächsten Einzeltrennschnitt erneut diesen Punkt anfährt, nicht mit einem zuvor verformten Werkstückteil kollidieren kann.

DE 10 2004 043076 A1 offenbart eine Randerkennung bei der Laserbearbeitung von Werkstücken.

Aufgabe der Erfindung ist es, ein eingangs genanntes Verfahren dahingehend weiterzubilden, dass die genannten Nachteile überwunden werden und ein besonders effizientes und sicheres Abtrennen des Randabschnitts von dem Werkstück ermöglicht wird, sowie eine zugehörige Laserschneidvorrichtung anzugeben. Da der Randbeschnitt für die weitere Verwendung des Bauteils irrelevant ist, weist er prozessbedingt sehr große Variationen von Teil zu Teil auf.

Diese Aufgabe wird erfindungsgemäß durch ein Verfahren mit den in Patentanspruch 1 angegebenen Merkmalen gelöst.

Der mit dem erfindungsgemäßen Verfahren verbundene Vorteil besteht im Wesentlichen darin, dass ein Randabschnitt des Werkstücks mit geringem Zeitaufwand von dem Werkstück abgetrennt und zugleich in einfach handhabbare Längenabschnitte zerteilt werden kann. Beim Abtrennen des Randabschnitts kann mittels des aus Einzeltrennschnitten gebildeten Lasertrennschnitts zudem eine Schnittkante mit hoher Qualität, d.h. insbesondere mit nur geringen oder keinen Stufen, realisiert werden. Werkstückform und -geometrie haben auf das Abschneiden des Randabschnitts keinen Einfluss. Auch können Randabschnitte mit unbekannten Abmessungen, insbesondere Breite, ohne weiteres von dem Werkstück abgeschnitten werden. Aufgrund der durch die Randerkennung, z.B. die Messung des Abstands des Laserschneidkopfs von dem Werkstück, gegebenen Möglichkeit zur Detektion eines (freien) Randes des Randabschnitts kann jeder Einzeltrennschnitt exakt bis mindestens zum Rand des Randabschnitts geführt werden. Eine unnötig lange Schnittführung (weit) über den Rand hinaus kann somit insgesamt vermieden werden. Dies resultiert in einem Zeitvorteil des Verfahrens. Zudem kann dadurch die Gefahr einer Kollision des Laserschneidkopfs mit dem Werkstück - d.h. insbesondere mit dem abzutrennenden Randabschnitt, zu dem in der Regel keinerlei CAD-Daten für eine entsprechende Schnittführung vorliegen - signifikant verringert werden, so dass Beschädigungen an der Laserschneidvorrichtung vermieden werden können. Auch können Prozessabrisse bzw. ein nur unvollständiges Abtrennen des Randbereichs bzw. einzelner Längenabschnitte desselben sicher vermieden werden. Dadurch erübrigt sich ein zeit- und kostenintensives Nacharbeiten des Werkstücks.

Der Einzeltrennschritt kann auch über eine vorgegebene Wegstrecke über den Rand des Randbereichs hinaus weitergeführt werden. Dadurch kann die Gefahr eines unvollständigen Einzeltrennschnitts im Bereich des Randes nochmals weiter reduziert werden. Die Länge der Wegstrecke, d.h. die Größe eines solchen Sicherheitszuschlags, kann dabei insbesondere in Abhängigkeit von einer Form oder Größe des Werkstücks bzw. auch von in der Praxis gewonnenen Erfahrungswerten bezüglich einer betriebsoptimal bemessenen Wegstrecke festgelegt werden.

Für das Ausführen des Einzeltrennschnitts wird vorzugsweise jeweils eine Sollendposition des Laserschneidkopfs relativ zu dem Werkstück vorgegeben, die von dem Lasertrennschnitt weiter beabstandet ist als ein Rand des Randabschnitts. Dadurch kann eine für das Ausführen des Einzeltrennschnitts erforderliche Relativbewegung des Laserschneidkopfs und des Werkstücks präzis und einfach gesteuert werden.

Ein besonders effizientes, d.h. zügiges und präzises Abtrennen des Randabschnitts kann dadurch realisiert werden, dass der Laserschneidkopf für den jeweils nächsten Einzeltrennschnitt in eine Startposition bewegt wird, die einer vorbestimmten Bearbeitungsposition des Laserschneidkopfs beim Ausführen des jeweils (unmittelbar) zuvor ausgeführten Einzeltrennschnitts entspricht. Die vorbestimmte Bearbeitungsposition kann insbesondere diejenige im Zeitpunkt des Richtungswechsels der Schnittführung des Einzelschnitts von einer Schnittführung längs des Lasertrennschnitts zu einer Schnittführung quer zum Lasertrennschnitt in Richtung des Rands des Randabschnitts sein. Dadurch können einander überlappende Einzeltrennschnitte vermieden werden.

Nach einer Weiterbildung der Erfindung werden dabei Ortskoordinaten der vorbestimmten Bearbeitungsposition in einem der Laserschneidvorrichtung zugeordneten Datenspeicher zwischengespeichert und als Ortskoordinaten des Laserschneidkopfs in der Startposition verwendet. Dadurch kann der Laserschneidkopf exakt und auf einfache Weise in der jeweiligen Startposition positioniert werden.

Vorteilhafter Weise werden Informationen zu Steuerzuständen des Laserschneidkopfs in der vorbestimmten Bearbeitungsposition zwischengespeichert und diese Steuerzustände des Laserschneidkopfs in der Startposition mittels der abgespeicherten Informationen wiederhergestellt. Die Steuerzustände können insbesondere eine jeweilige Ausrichtung des Laserschneidkopfes gegenüber dem Werkstück und eine jeweilige Schneidleistung eines Laserschneidstrahls des Laserschneidkopfs umfassen. Dadurch können zudem zwischenzeitlich geänderte Steuerzustände des Laserschneidkopfs kompensiert und eine Schnittkante des Lasertrennschnitts mit besonders hoher Qualität erzeugt werden.

Der Laserschneidkopf wird vorzugsweise mit deaktiviertem Laserschneidstrahl und ohne Randerkennung, z.B. ohne Messung seines Abstands zur Werkstückoberfläche, in die Startposition bewegt. Bei deaktiviertem Laserschneidstrahl kann eine mögliche Beschädigung des Werkstücks vermieden werden. Im Falle der deaktivierten Abstandsmessung kann eine höhere Verstellbewegung des Laserschneidkopfs realisiert werden.

Die Gefahr einer Kollision des Laserschneidkopfs mit dem Werkstück kann erfindungsgemäß dadurch verringert werden, dass der Laserschneidkopf nach einem Einzeltrennschnitt entlang einer definierten Bewegungsbahn in die Startposition des nächsten Einzeltrennschnitts bewegt wird.

Die Bewegungsbahn ist dabei vorzugsweise gegenüber der Werkstückoberfläche gekrümmt, so dass der Laserschneidkopf mit einem geeigneten Sicherheitsabstand von dem Werkstück verfahren werden kann. Es versteht sich, dass eine solche Bewegungsbahn auch bei einer anderen Relativbewegung des Laserschneidkopfs und des Werkstücks für das Positionieren des Laserschneidkopfs in der Startposition vorgesehen sein kann.

Die Bewegungsbahn kann im Hinblick auf ein möglichst zügiges Positionieren des Laserschneidkopfes in der Startposition dadurch weiter optimiert werden, dass diese mittels Abstandsmessdaten definiert wird, die während des jeweils zuvor ausgeführten Einzeltrennschnitts bei der Überwachung des Abstands des Laserschneidkopfes von der Werkstückoberfläche gewonnen werden. Dadurch werden starr vorgegebene und ggf. unnötig lange Verstellwege vermieden. Vorzugsweise wird zur Randerkennung das am Werkstück reflektierte Laser- oder Prozesslicht oder der Abstand zwischen Laserschneidkopf und Werkstück gemessen

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fig.1: eine Laserschneidvorrichtung mit einem über einem Werkstück positionierten Laserschneidkopf während des Abschneidens eines Randabschnitts des Werkstücks mittels eines Lasertrennschnitts, in einer Seitenansicht; und
- Fig.2: eine Draufsicht auf den mittels eines Lasertrennschnitts abzuschneidenden Randbereich des in Fig. 1 gezeigten Werkstücks, wobei erfindungsgemäß der Lasertrennschnitt durch mehrere aneinander gereihte Einzeltrennschnitte gebildet ist.

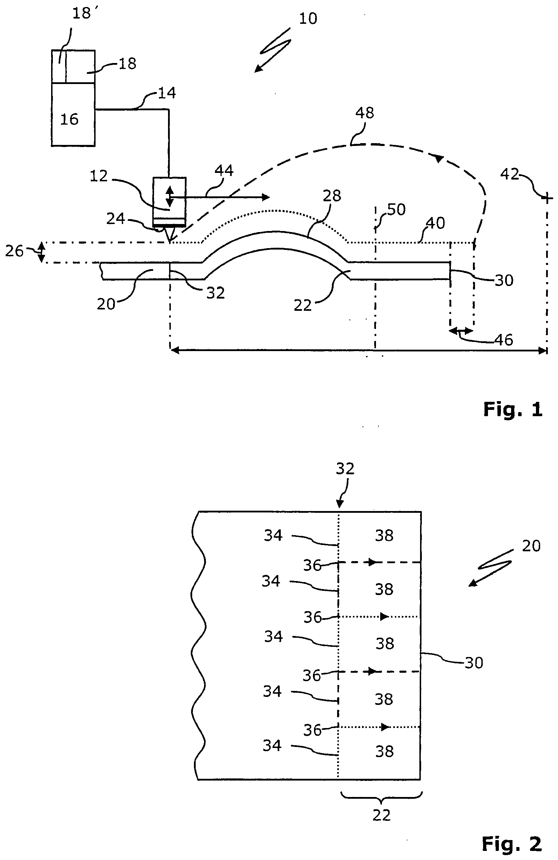

**Fig.1** zeigt eine Laserschneidvorrichtung **10** mit einem mehrachsig bewegbaren Laserschneidkopf **12**, der über eine Steuerleitung **14** mit einer Steuereinrichtung **16** verbunden ist. Die Steuereinrichtung 16 weist einen Datenspeicher **18** mit einem Zwischenspeicher **18'** auf. Der Laserschneidkopf 12 ist vorliegend über einem als Tiefziehteil ausgebildeten Werkstück **20** mit einem Randabschnitt **22** positioniert und weist eine berührungslos arbeitende Abstandsmesseinrichtung (Abstandssensor) **24** zum Messen seines Abstands **26** von dem Werkstück 20 auf. Der Randabschnitt 22 des Werkstücks 20 weist eine in der Fig. nach oben weisende Vorwölbung **28** und einen freien Rand **30** auf.

Die Steuereinrichtung 16 ist zum Ausführen des nachfolgend erläuterten Verfahrens zum Abschneiden des Randabschnitts 22 des Werkstücks 20 mittels eines von dem Laserschneidkopf 12 ausgeführten Lasertrennschnitts **32** programmiert.

Der Randabschnitt 22 wird, wie aus **Fig. 2** näher hervorgeht, mittels eines bei dem vorliegenden Werkstück 20 im Wesentlichen parallel zum freien Rand 30 des Werkstücks 20 verlaufenden Lasertrennschnitts 32 abgetrennt. Der jeweilige Verlauf des Lasertrennschnitts 32 wird mittels in dem Datenspeicher 18 abgespeicherter CAD-Daten zu einer vorbestimmten Kontur des Werkstücks 20 vorgegeben. Liegen keine CAD-Informationen über den Ziehrand vor, so kann dieser auch alternativ durch Teachen direkt von einem exemplarischen Bauteil erfasst werden.

Der Lasertrennschnitt 32 wird durch mehrere, vorliegend fünf, aneinander gereihte Einzeltrennschnitte **34** gebildet, wobei jeder Einzeltrennschnitt 34 vor dem Ausführen des jeweils nächsten Einzeltrennschnitts 34 zunächst unter Messung des Abstands 26 zwischen Laserschneidkopf 12 und Werkstück 20 in Richtung des Rands 30 des Randabschnitts 22 geführt wird. D.h., der Einzeltrennschnitt 34 wird quer zum auszubildenden Lasertrennschnitt 32, hier in einem Winkel von 90 Grad, in Richtung des Rands 30 geführt, wie dies in Fig. 2 durch die gestrichelten Linien verdeutlicht ist. Das gleiche Verfahren kann auch zum Abtrennen des letzten Längenabschnitts **38** verwendet werden, hier liegt die Trennkante in Richtung des Lasertrennschnitts 32.

An den jeweils mit **36** bezeichneten Positionen der Einzeltrennschnitte 34 werden jeweils die zugehörigen Ortskoordinaten und Betriebsparameter des Laserschneidkopfs 12 in diesen Positionen 36 in dem Zwischenspeicher 18' des Datenspeichers 18 der Steuereinrichtung 16 zwischengespeichert. Diese werden,-wie nachstehend näher erläutert wird, zum Festlegen des Startpunkts für den jeweils nächsten Einzeltrennschnitt 34 verwendet.

Die Einzeltrennschnitte 34 werden vor dem Ausführen des jeweils nächsten Einzeltrennschnitts 34 zumindest soweit in Richtung des Rands 30 des Randabschnitts 22 geführt, bis der Rand 30 anhand der Abstandsmessung erkannt wird. Auf diese Weise werden nacheinander einzelne Längenabschnitte 38 des Randabschnitts 22 von dem Werkstück 20 abgeschnitten.

Bei den Abstandsmessungen gewonnene Abstandsmesswerte werden zur Regelung des Abstands 26 des Laserschneidkopfes 12 auf einen vorgegebenen Abstandsollwert herangezogen. Der Laserschneidkopf 12 wird somit beim Ausführen der Einzeltrennschnitte 34 an jeweiligen Oberflächenkonturen des Werkstücks 20, wie der hier wiedergegebenen Vorwölbung 28 des Randabschnitts 22 (Fig. 1), entlang der gestrichelt dargestellten Verstellbahn **40** vorbeibewegt.

Die von der Abstandsmesseinrichtung 24 während der Schnittführung des Einzeltrennschnitts 34 in Richtung auf den Rand 30, also quer zum Lasertrennschnitt 32, ermittelten Abstandsmesswerte werden bevorzugt jeweils im Zwischenspeicher 18' des Datenspeichers 18 zwischengespeichert.

Jeder Einzeltrennschnitt 34 wird durch Vorgabe einer Sollendposition **42** des Laserschneidkopfs 12 in Hauptbewegungsrichtung **44** beim Führen des Einzeltrennschnitts in Richtung des Randes 30 begrenzt. Die Sollendposition 42 wird so gewählt, dass diese in jedem Fall Hauptbewegungsrichtung 44 von dem Lasertrennschnitt 32 weiter beabstandet ist als der Rand 30 des Randabschnitts 22.

Bei dem hier gezeigten Ausführungsbeispiel werden die Einzeltrennschnitte 34, nachdem der Rand 30 anhand der Abstandsmessung erkannt worden ist, zusätzlich noch über eine vorgegebene Wegstrecke **46** über den Rand 30 des Randabschnitts 22 hinaus geführt, um ein vollständiges Abschneiden der Längenabschnitte 38 mit einem nochmals höheren Maß an Sicherheit zu gewährleisten oder Kollisionen z.B. mit einem verrutschenden Randabschnitt 22 nach dem Abschneiden zu vermeiden.

Sobald der Einzeltrennschnitt 34 beendet ist, werden der den Einzeltrennschnitt 34 ausführende Laserstrahl (nicht gezeigt) des Laserschneidkopfs 12 und die Abstandsmesseinrichtung 24 des Laserschneidkopfs 12 deaktiviert.

Der Laserschneidkopf 12 wird nachfolgend für den nächsten Einzeltrennschnitt 34 in eine definierte Startposition bewegt, die der vorstehend erläuterten Bearbeitungsposition 36 des Laserschneidkopfs bei Ausführen des jeweils zuvor ausgeführten Einzeltrennschnitts 34, hier der Bearbeitungsposition 36 des Läserschneidkopfs 12 im Zeitpunkt des Richtungswechsels der Schnittführung des zuvor ausgeführten Einzeltrennschnitts 34 in Richtung auf den Rand 30, entspricht.

Zur Positionierung des Schneidkopfs 12 in der Startposition werden die in dem Zwischenspeicher 18' des Datenspeichers 18 zwischengespeicherten Ortskoordinaten des Laserschneidkopfs 12 als Ortskoordinaten der Startposition verwendet.

Der Laserschneidkopf 12 wird entlang einer definierten Bewegungsbahn **48** zu der Startposition bewegt. Die Bewegungsbahn 48 wird bevorzugt mittels der im Zwischenspeicher 18' des Datenspeichers 18 gespeicherten Abstandsmesswerte definiert, die während des jeweils zuvor ausgeführten Einzeltrennschnitts 34 von der Abstandsmesseinrichtung 24 gewonnen wurden. Die Bewegungsbahn 48 ist vorliegend gegenüber dem Werkstück 20 gekrümmt und verläuft zu diesem derart beabstandet, dass eine Kollision des Laserschneidkopfs 12 mit der Vorwölbung 28 des Werkstücks 20 sicher vermieden wird.

In der Startposition werden die im Zwischenspeicher 18' des Datenspeichers 18 abgespeicherten Steuerungszustände des Laserschneidkopfs 12 in der Bearbeitungsposition 36 des jeweils zuvor ausgeführten Einzeltrennschnitts wiederhergestellt und nachfolgend der nächste Einzeltrennschnitt 34 in einer zu vorstehenden Ausführungen entsprechenden Weise ausgeführt. Der Randabschnitt 22 wird mit einem letzten der mehreren Einzeltrennschnitte 34 vollständig von dem Werkstück 20 abgetrennt.

Bevorzugt erfolgt die erneute Aktivierung des Laserstrahls nicht direkt in der Bearbeitungsposition 36, sondern in der Nähe davon, aber nicht am oder über dem Werkstück 20, um Anschmelzungen zu verhindern. Der Laserschneidkopf 12 fährt anschließend zur Bearbeitungsposition 36 und setzt dort seine Bearbeitung mit dem üblichen Tempo fort. Der Laserstrahl wird also derart auf die Sollbahn zurückgeführt, dass nach dem Abtrennen des Randbeschnitts keine Konturverletzung auftritt.

Um zu verhindern, dass eine im Randabschnitt 22 befindliche Kante fälschlicherweise als Rand 30 interpretiert wird, wird bevorzugt die Randerkennung von der Steuereinrichtung 16 erst dann aktiviert, wenn der Einzelschnitt 34 bzw. der Laserschneidkopf 12 in Hauptbewegungsrichtung 44 einen vorbestimmten Abstand zum Lasertrennschnitt 32 erreicht haben, also in Fig. 1 erst dann, wenn die Linie **50** überschritten wird.

Statt des beschriebenen Abstands zwischen Laserschneidkopf 12 und Werkstück 20 kann zur Randerkennung auch das am Werkstück 20 reflektierte Laser- oder Prozesslicht durch geeignete Sensoren gemessen werden.

## Patentansprüche

1. Verfahren zum Abschneiden eines Randabschnitts (22) des Werkstücks (20) mittels eines Lasertrennschnitts (32), wobei der Lasertrennschnitt (32) durch mehrere aneinander gereihte Einzeltrennschnitte (34) gebildet wird und wobei ein den Lasertrennschnitt (32) ausführender Laserschneidkopf (12) nach einem Einzeltrennschnitt (34) jeweils entlang einer definierten Bewegungsbahn (48) in eine Startposition des jeweils nächsten Einzeltrennschnitts (34) bewegt wird,
**dadurch gekennzeichnet,**
**dass** jeder Einzeltrennschnitt (34) vor dem Ausführen des jeweils nächsten Einzeltrennschnitts (34) bei aktivierter Randerkennung (24) zumindest soweit in Richtung auf einen Rand (30) des Randabschnitts (22) geführt wird, bis anhand der Randerkennung (24) der Rand (30) des Randabschnitts (22) erkannt wird,
**dass** die Randerkennung (24) jeweils erst ab einem vorbestimmten Abstand (50) des Einzeltrennschnitts (34) zum Lasertrennschnitt (32) aktiviert wird, und dass der den Einzelschnitt (34) ausführende Laserstrahl des Laserschneidkopfs (12) und die Randerkennung (24) jeweils deaktiviert werden, sobald der Einzeltrennschnitt (34) beendet ist.

2. Verfahren nach Anspruch 1, **dadurch gekennzeichnet, dass** jeder Einzeltrennschritt (34) nach dem Erkennen des Rands (30) des Randabschnitts (22) über eine vorgegebene Wegstrecke (46) über den Rand (30) des Randabschnitts (22) hinaus weitergeführt wird.

3. Verfahren nach Anspruch 1 oder 2, **dadurch gekennzeichnet, dass** der Laserschneidkopf (12) für den jeweils nächsten Einzeltrennschnitt (34) in eine Startposition bewegt wird, die einer vorbestimmten Bearbeitungsposition (36) des Laserschneidkopfs (12) beim Ausführen des jeweils zuvor ausgeführten Einzeltrennschnitts (34) entspricht.

4. Verfahren nach Anspruch 3, **dadurch gekennzeichnet, dass** Ortskoordinaten der vorbestimmten Bearbeitungsposition (36) und/oder Informationen zu Steuerungszuständen des Laserschneidkopfs (12) in der vorbestimmten Bearbeitungsposition (36) zwischengespeichert werden.

5. Verfahren nach Anspruch 4, **dadurch gekennzeichnet, dass** die Informationen zu den Steuerzuständen des Laserschneidkopfs (12) zur Wiederherstellung dieser Steuerzustände in der Startposition des jeweils nächsten Einzeltrennschnitts (34) verwendet werden.

6. Verfahren nach einem der vorhergehenden Ansprüche, **dadurch gekennzeichnet, dass** die Bewegungsbahn (48) mittels Abstandsmesswerten definiert wird, die während des jeweils zuvor ausgeführten Einzeltrennschnitts (34) bei einer Überwachung des Abstands (26) des Laserschneidkopfes (12) von dem Werkstück (22) gewonnen werden.

7. Verfahren nach einem der vorgehenden Ansprüche, **dadurch gekennzeichnet, dass** der Laserschneidkopf (12) nach Ausführen eines Einzeltrennschnitts (34) mit deaktiviertem Laserschneidstrahl in die Startposition des jeweils nächsten Einzeltrennschnitts (34) bewegt wird.

8. Verfahren nach einem der vorgehenden Ansprüche, **dadurch gekennzeichnet, dass** zur Randerkennung das am Werkstück (20) reflektierte Laser- oder Prozesslicht oder der Abstand (26) zwischen Laserschneidkopf (12) und Werkstück (20) gemessen wird.

## Claims

1. A method for cutting off an edge portion (22) of a workpiece (20) by means of a laser severing cut (32), wherein the laser severing cut (32) is formed by a plurality of individual severing cuts (34) strung together, and wherein, after an individual severing cut (34), a laser cutting head (12) that performs the laser severing cut (32) is moved to a start position of the respective next individual severing cut (34) along a defined movement path (48), **characterized in that**
each individual severing cut (34) is directed, with edge detection (24) activated, in the direction towards an edge (30) of the edge portion (22) at least until the edge (30) of the edge portion (22) is detected on the basis of the edge detection (24), before the respective next individual severing cut (34) is executed,
that the edge detection (24) is activated only as from a predetermined distance (50) of the individual severing cut (34) from the laser severing cut (32),
and that the laser beam of the laser cutting head (12) performing the individual cut (34) and the edge detection (24) are respectively deactivated as soon as the individual severing cut (34) is terminated.

2. A method according to claim 1, **characterised in that**, after detection of the edge (30) of the edge portion (22), each individual severing cut (34) is continued beyond the edge (30) of the edge portion (22) for a predefined distance (46).

3. A method according to claim 1 or 2, **characterised in that** the laser cutting head (12) is moved for the respective next individual severing cut (34) to a start position that corresponds to a predetermined processing position (36) of the laser cutting head (12) when executing the respective previously executed individual severing cut (34).

4. A method according to claim 3, **characterised in that** position coordinates of the predetermined processing position (36) and/or information relating to control states of the laser cutting head (12) in the predetermined processing position (36) are stored in temporary memory.

5. A method according to claim 4, **characterised in that** the information relating to the control states of the laser cutting head (12) are used to re-establish those control states in the start position of the respective next individual severing cut (34).

6. A method according to any one of the preceding claims, **characterised in that** the movement path (48) is defined by means of measured distance values obtained during the respective previously executed individual severing cut (34) in a monitoring of the distance (26) of the laser cutting head (12) from the workpiece (22).

7. A method according to any one of the preceding claims, **characterised in that**, after executing an individual severing cut (34), the laser cutting head (12) is moved to the start position of the respective next individual severing cut (34) with the laser cutting beam deactivated.

8. A method according to any one of the preceding claims, **characterised in that** the laser light or process light reflected at the workpiece (20) or the distance (26) between laser cutting head (12) and workpiece (20) is measured for the purpose of edge detection.

## Revendications

1. Procédé de sectionnement, par une coupe de séparation (32) effectuée au laser, d'une région marginale ou de bord (22) d'une pièce (20) à usiner, sachant que ladite coupe de séparation (32) au laser est produite par plusieurs coupes séparatrices individuelles (34) alignées les unes avec les autres, et sachant qu'à l'issue d'une coupe séparatrice individuelle (34), une tête (12) de découpe au laser, exécutant ladite coupe de séparation (32) au laser, est respectivement mue le long d'une trajectoire de mouvement (48) bien définie, jusqu'à un emplacement de départ de la coupe séparatrice individuelle (34) respectivement successive,
**caractérisé par le fait**
**que**, préalablement à l'exécution de la coupe séparatrice individuelle (34) respectivement successive, une reconnaissance marginale ou de bord (24) étant activée, chaque coupe séparatrice individuelle (34) est guidée en direction d'une arête (30) de la région marginale ou de bord (22), au moins jusqu'à ce que ladite arête (30) de la région marginale ou de bord (22) soit repérée à l'appui de la reconnaissance marginale ou de bord (24) ;
**que** ladite reconnaissance marginale ou de bord (24) est activée, à chaque fois, uniquement à partir d'une distance prédéterminée (50) comprise entre ladite coupe séparatrice individuelle (34) et la coupe de séparation (32) au laser ;
et **que** le faisceau laser de la tête (12) de découpe au laser exécutant ladite coupe individuelle (34), et ladite reconnaissance marginale ou de bord (24), sont respectivement désactivés dès l'achèvement de ladite coupe séparatrice individuelle (34).

2. Procédé selon la revendication 1, **caractérisé par le fait qu'**à l'issue du repérage de l'arête (30) de la région marginale ou de bord (22), chaque coupe séparatrice individuelle (34) est poursuivie, d'une course (46) préétablie, au-delà de ladite arête (30) de la région marginale ou de bord (22).

3. Procédé selon la revendication 1 ou 2, **caractérisé par le fait que** la tête (12) de découpe au laser est mue, en vue de la coupe séparatrice individuelle (34) respectivement successive, jusqu'à un emplacement de départ correspondant à un emplacement d'usinage prédéterminé (36) de ladite tête (12) de découpe au laser lors de l'exécution de la coupe séparatrice individuelle (34) respectivement exécutée à un stade antérieur.

4. Procédé selon la revendication 3, **caractérisé par le fait que** des coordonnées de localisation de l'emplacement d'usinage prédéterminé (36), et/ou des informations relatives à des états de commande de la tête (12) de découpe au laser audit emplacement d'usinage prédéterminé (36), font l'objet d'une mémorisation intermédiaire.

5. Procédé selon la revendication 4, **caractérisé par le fait que** les informations, relatives aux états de commande de la tête (12) de découpe au laser, sont utilisées pour la restauration de ces états de commande à l'emplacement de départ de la coupe séparatrice individuelle (34) respectivement successive.

6. Procédé selon l'une des revendications précédentes, **caractérisé par le fait que** la trajectoire de mouvement (48) est définie au moyen de valeurs de mesure de distance qui sont acquises, au cours de la coupe séparatrice individuelle (34) respectivement exécutée à un stade antérieur, lors d'une surveillance de la distance (26) comprise entre la tête (12) de découpe au laser et la pièce (20) à usiner.

7. Procédé selon l'une des revendications précédentes, **caractérisé par le fait qu'**après exécution d'une coupe séparatrice individuelle (34), le faisceau de découpe au laser étant désactivé, la tête (12) de découpe au laser est mue jusqu'à l'emplacement de départ de la coupe séparatrice individuelle (34) respectivement successive.

8. Procédé selon l'une des revendications précédentes, **caractérisé par le fait que** la lumière laser, ou lumière de processus réfléchie sur la pièce (20) à usiner, ou la distance (26) comprise entre la tête (12) de découpe au laser et ladite pièce (20) à usiner, est mesurée en vue de la reconnaissance marginale ou de bord.
